# EUROPEAN PATENT APPLICATION

(11) **EP 3 412 389 A1**
(43) Date of publication of application: **12.12.2018**
(21) Application number: 18176007.5
(22) Date of filing: 05.06.2018
(51) Int. Cl.: B23C 3/35, B23Q 7/10

(54) **MAGAZINE FOR KEY BLANK DISPENSING SYSTEM**

(30) Priority: 06.06.2017 GB 201708957
(71) Applicant: Iconx Limited, Brighton, East Sussex BN1 1AX (GB)
(72) Inventor: Horsfall, David Anthony, Silsden, Keighley B20 0EF (GB); Crowther, Polly, Silsden, Keighley BD20 0EF (GB)
(74) Representative: Sales, Robert Reginald

(57) **Abstract**

A magazine (10) for receiving a plurality of cylinder key blanks (20) stacked vertically one above each other in a substantially identical alignment to each other. The magazine has front and rear ends (22, 24) and first and second sides (26, 28) which define a vertically extending profiled opening (30). In plan view the profiled opening (30) has a rear part (32) to locate a cylinder key blank head (34) and a main part (36) of lesser width than the rear part (32), extending forwards from the rear part (32) to locate a cylinder key blank shank (38). In plan view the profiled opening (30) also has a side part (40) on the first side (26) to locate the ear (42) of a cylinder key blank (20), such that a cylinder key blank (20) can only be located in the profiled opening (30) in one orientation with the key blank ear (42) locating in the first side part (40). The lower end of the magazine (10) is configured such that a lowermost cylinder key blank (20) only can be dispensed therefrom in a forwards direction.

## Description

This invention concerns a cylinder key blank storage magazine, a key blank dispensing system, and especially such a system for an automatic key cutting machine.

In a number of applications and especially in automatic key cutting machines, it is required to have a key blank dispensing system which enables a key blank to be dispensed when required in a desired orientation. Key blanks for two main types of keys are principally provided in such systems.

One type of key blank is for producing a cylinder key. Such a blank is generally relatively flat and includes a head with a shank extending therefrom, which shank is cut as required to operate a particular lock. A lateral projection referred to as an "ear" is generally provided at the proximal end of the shank adjacent the head.

A wide range of different sizes and shapes of key blanks are available, and it is desirable for a system to be usable with such a wide range of key blanks, with the most appropriate respective key blank being cut as required.

According to a first aspect of the invention there is provided a magazine for receiving a plurality of cylinder key blanks stacked vertically one above each other in a substantially identical alignment to each other, the magazine having front and rear ends and first and second sides which define a vertically extending profiled opening, the profiled opening in plan view having a rear part to locate a cylinder key blank head; a main part of lesser width than the rear part, extending forwards from the rear part to locate a cylinder key blank shank; and a side part on the first side only to locate the ear of a cylinder key blank, such that a cylinder key blank can only be located in the profiled opening in one orientation with the key blank ear locating in the first side part; the lower end of the magazine being configured such that a lowermost cylinder key blank only can be dispensed therefrom in a forwards direction.

The magazine may have side walls which extend below the rear, main and side parts to define a forward open slot through which the lowermost cylinder key blank can be dispensed in a forwards direction.

Blanking formations may be provided in or adjacent the profiled opening rear part to selectively locate blanking members to reduce the size of the rear part.

Blanking formations may be provided in or adjacent the profiled opening side part to selectively locate the blanking members to reduce the size of the side part.

The blanking formations may be in the form of vertically extending slots.

Spacing projections may be provided on the outside of one or more of the magazine side walls to provide a required spacing from an adjacent such magazine.

An abutment member may be provided on the second side opposite the side part of the profiled opening, to prevent a blank being located in the magazine with the ear on the second side.

Mounting formations may be provided on the outside of the magazine to permit mounting of the magazine to an item or fixture, and/or mounting of items to the outside of the magazine. The mounting formations may be in the form of vertically extending channels.

Fixing formations may be provided on the front end of the magazine to permit items to be mounted thereto. The fixing formations may be in the form of vertically extending slots. The interior of the slots may be contoured to engage with a threaded member extending thereinto.

A forward extending part may be provided on the front of the magazine to continue at least part of the forwards open slot to guide cylinder key blanks extending from the magazine.

Mounting formations may be provided on the magazine rear end, which mounting formations may be in the form of holes.

According to a further aspect of the invention there is provided a cylinder key blank dispensing system, the system including one or more magazines according to any of the preceding eleven paragraphs.

Guide members may be provided engageable with cylinder key blanks being dispensed from the magazine, and the guide members may be provided on the front end fixing formations. The guide members may be in the form of downwardly urged sprung members.

One or more blanking members may be provided located in the blanking formations in the rear or side parts of the profiled opening.

According to still further aspect of the invention there is provided an automatic key cutting machine including a key blank dispensing system according to any of the above three paragraphs.

An embodiment of the present invention will now be described by way of example only and with reference to the accompanying drawings, in which:-
Fig. 1 is a diagrammatic plan view of a storage magazine according to the invention;
Figs. 2 - 5 are similar views to Fig. 1 of the magazine containing different key blanks;
Fig. 6 is a perspective view of the magazine of Fig. 1;
Fig. 7 is a diagrammatic perspective view of an automatic key cutting machine according to the invention;
Fig. 8 is a diagrammatic plan view of the storage magazine of Fig. 1, and also shows part of the machine of Fig. 7; and
Fig. 9 is a front view of the magazine in part of the machine of Fig. 7 as shown in Fig. 8.

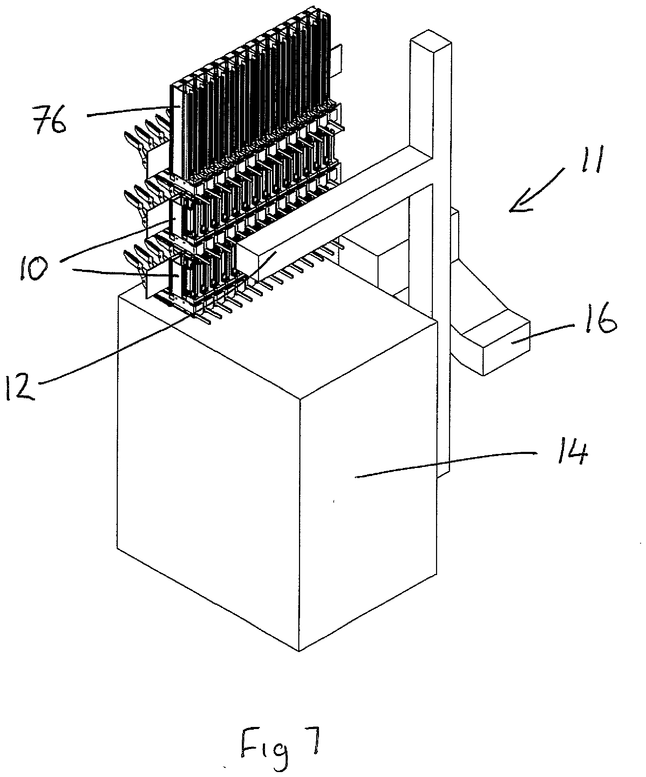

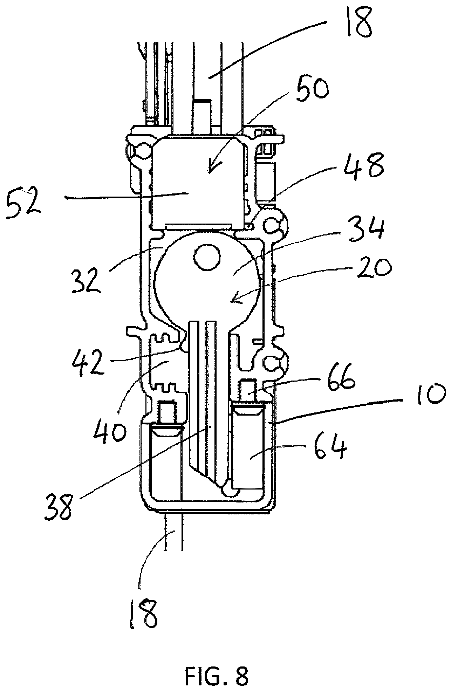

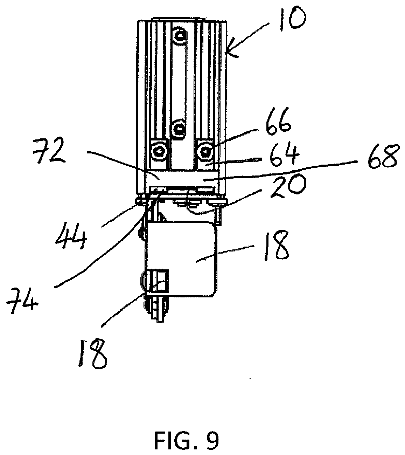

Fig. 7 of the drawings show an automatic key cutting machine 11 which contains a plurality of magazines 10 for holding different key blanks. A blank picking device 12 is provided for selectively taking a blank from a respective magazine 10 and transferring the blank to a key cutting assembly 14, and subsequently taking the cut key to a delivery location 16. Figs. 8 and 9 show part of an assembly 18 for dispensing a key blank from a magazine.

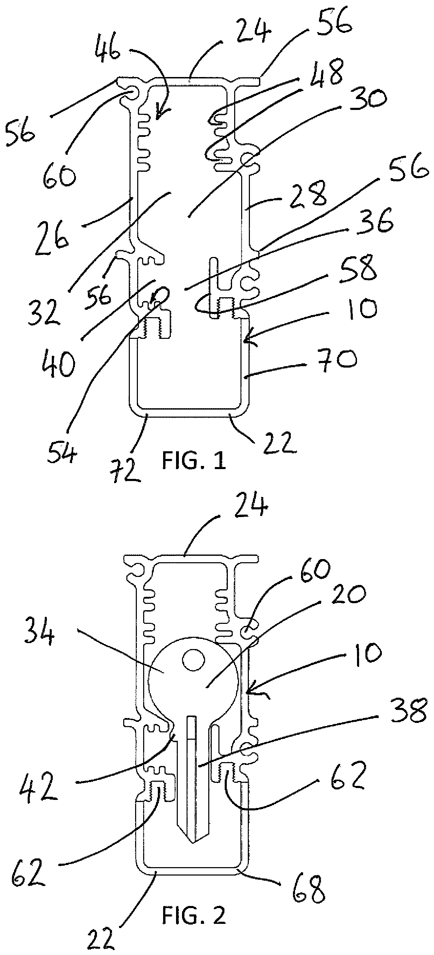

Figs. 1 to 6 of the drawings show a one of the magazines 10 for locating a number of a particular cylinder key blanks 20 and permitting the cylinder key blanks 20 to be dispensed one at a time from the magazine 10 to the picking device 12. The magazine 10 is in the form of a profiled elongate member which may be in the form of an extrusion. The magazine 10 has front and rear ends 22, 24 and first and second sides 26, 28 defining a vertically extending profiled opening 30.

In plan view the profiled opening 30 has a rear part 32 to locate the head 34 of a cylinder key blank 20. The rear part 32 extends to a main part 36 of lesser width to locate a cylinder key blank shank 38. A side part 40 is provided on the first side 26of the main part 36 to locate the ear 42 of the cylinder key blank 20 such that the cylinder key blank 20 can only be located in the magazine 10 in one orientation, with the ear 42 to the left hand side for instance as shown in Figs. 1 - 5.

The lower end of the magazine 10 defines a forward opening slot 44 as best shown in Fig. 9, allowing a single lowermost cylinder key blank 20 to be dispensed as required. The magazine side walls 26, 28 extend on each side of the slot 44.

Two pairs of blanking formations 46 each in the form of vertically extending projections defining slots 48 extending inwardly from the respective side walls 26, 28, are provided behind the rear part 32 and can slidingly receive a blanking member 50 as shown in Fig. 8. The blanking member 50 in the form of a strip which extends in and between the respective slots 48, and has a cranked top part 52 to facilitate handling thereof. One such blanking member 50 is illustrated in Fig. 8 and prevents a key blank moving rearwardly beyond a required amount.

Similar side blanking formations 54 are provided in the side part 40 to locate a blanking member if required to prevent the ear 42 of a cylinder key blank 20 extending too far into the side part 40.

Two pairs of elongate vertically extending spacing projections 56 are provided respectively one pair on each outer side wall 26, 28 of the magazine 10, with one projection 56 of each pair at the rear 24 of the magazine 10, and the other 56 projection of each pair approximately half way towards the front 22 of the magazine 10. The spacing formations 56 provide correct spacing relative to an adjacent magazine 10 as shown for example in Fig. 7.

An abutment member 58 in the form of a longitudinally extending plate is provided opposite the side part 40, against which the side of a cylinder key blank 20 without the ear 42 can engage.

Mounting formations 60 in the form of partially closed vertically extending circular openings are provided, one at the rear end of the first side 26, and two spaced along the second side 28. The mounting formations 60 permit mounting of the magazine 10 to an item or fixture, or to other such magazines 10.

A pair of fixing formations 62 are provided in the form of forward open vertical slots with corrugated sides to define threads. One formation 62 is provided on each side at the front of the main part 36 of the profiled opening, with the fixing formation 62 on the second side 28 spaced a short distance behind the fixing formation 62 on the front side 26. The fixing formations 62 permit sprung L-shaped guide members 64 to be mounted thereto by screws 66 threadingly engaging in the formations 62. The guide members 64 guide a key blank 20 as it moves forward out of the magazine 10.

A guide member 68 is provided at the front lower end of the magazine 10 and comprises full height side walls 70 interconnected by a front wall 72 with a gap 74 provided beneath the front wall 70 forming part of the slot 44 through which a key blank 20 can be dispensed.

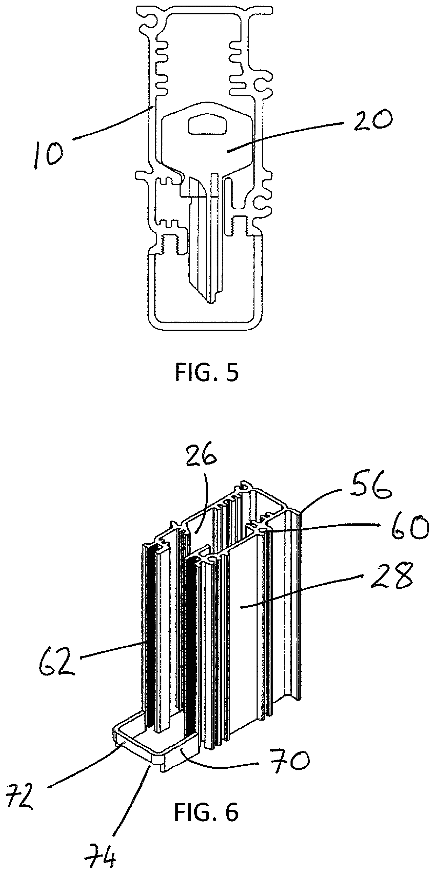

The magazine 10 shown in Fig. 6 is a relatively short magazine and would generally be used for less common cylinder key blanks. Different heights of magazines can be provided, with taller magazines 76 for more common key blanks 20 as is shown in Fig. 7.

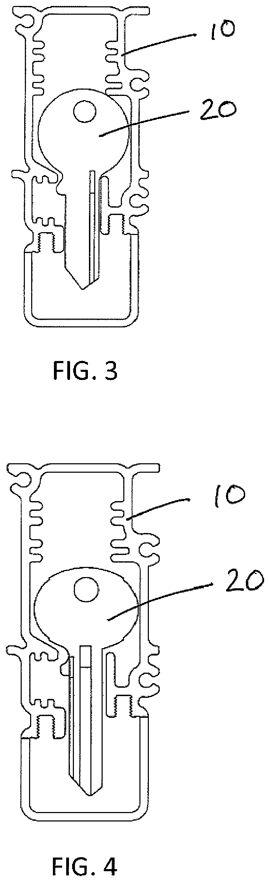

The magazines 10 thus described therefore permit a wide range of different shape and sizes of cylinder key blanks 20 to be mounted one above each other and dispensed one at a time for instance in an automatic key cutting machine 11. As is indicated blanking members 50 may be provided as required for different sizes and shapes of cylinder key blanks. Figs. 2 to 5 show the magazine 10 being used with a range of different key blanks 20. Blanking members may be used for instance with the blanks shown in Figs. 4 and 5, but the respective ears may retain the blanks in position in the magazines.

It is to be realised that a wide range of modifications may be made without departing from the scope of the invention. For instance different mounting arrangements may be provided on the magazines and/or guide formations. Different blanking members could be used.

Whilst endeavouring in the foregoing specification to draw attention to those features of the invention believed to be of particular importance it should be understood that the Applicant claims protection in respect of any patentable feature or combination of features hereinbefore referred to and/or shown in the drawings whether or not particular emphasis has been placed thereon.

## Claims

1. A magazine for receiving a plurality of cylinder key blanks stacked vertically one above each other in a substantially identical alignment to each other, the magazine having front and rear ends and first and second sides which define a vertically extending profiled opening, the profiled opening in plan view having a rear part to locate a cylinder key blank head; a main part of lesser width than the rear part, extending forwards from the rear part to locate a cylinder key blank shank; and a side part on the first side only to locate the ear of a cylinder key blank, such that a cylinder key blank can only be located in the profiled opening in one orientation with the key blank ear locating in the first side part; the lower end of the magazine being configured such that a lowermost cylinder key blank only can be dispensed therefrom in a forwards direction.

2. A magazine according to claim 1, in which the magazine has side walls which extend below the rear, main and side parts to define a forward open slot through which the lowermost cylinder key blank can be dispensed in a forwards direction.

3. A magazine according to claims 1 or 2, in which blanking formations are provided in or adjacent the profiled opening rear part to selectively locate blanking members to reduce the size of the rear part.

4. A magazine according to any of the preceding claims, in which blanking formations are provided in or adjacent the profiled opening side part to selectively locate the blanking members to reduce the size of the side part.

5. A magazine according to claim 2 or any of claims 3 or 4 when dependent on claim 2, in which spacing projections are provided on the outside of one or more of the magazine side walls to provide a required spacing from an adjacent such magazine.

6. A magazine according to any of the preceding claims, in which an abutment member is provided on the second side opposite the side part of the profiled opening, to prevent a blank being located in the magazine with the ear on the second side.

7. A magazine according to any of the preceding claims, in which mounting formations are provided on the outside of the magazine to permit at least one of: mounting of the magazine to an item or fixture, or mounting of items to the outside of the magazine.

8. A magazine according to any of the preceding claims, in which fixing formations are provided on the front end of the magazine to permit items to be mounted thereto.

9. A magazine according to claim 2 or any of claims 3 to 11 when dependent on claim 2, in which a forward extending part is provided on the front of the magazine to continue at least part of the forwards open slot to guide cylinder key blanks extending from the magazine.

10. A magazine according to any of the preceding claims, in which mounting formations are provided on the magazine rear end.

11. A cylinder key blank dispensing system, the system including one or more magazines according to any of the preceding claims.

12. A cylinder key blank dispensing system according to claim 11, in which guide members are provided engageable with cylinder key blanks being dispensed from the magazine.

13. A cylinder key blank dispensing system according to claim 12, in which the guide members are provided on the front end fixing formations.

14. A cylinder key blank dispensing system according to any of claims 11 to 13 when dependent on claims 3 or 4, in which one or more blanking members are provided located in the blanking formations in the rear or side parts of the profiled opening.

15. An automatic key cutting machine including a key blank dispensing system according to any of claims 16 to 20.
